# EUROPÄISCHE PATENTSCHRIFT

(11) **EP 2 050 629 B1**
(45) Veröffentlichungstag und Bekanntmachung des Hinweises auf die Patenterteilung: **27.04.2011**
(21) Anmeldenummer: 07020251.0
(22) Anmeldetag: 16.10.2007
(51) Int. Cl.: B60R 21/213

(54) **Luftsackanordnung**
Air bag assembly
Installation de coussin d'air

(43) Veröffentlichungstag der Anmeldung: 22.04.2009
(73) Patentinhaber: Autoliv Development AB, 447 83 Vårgårda (SE)
(72) Erfinder: Kleipödßus, Ingo, 42549 Velbert (DE); Maiwald, Helmut, 51515 Kürten (DE)
(74) Vertreter: Schön, Thilo

(56) Entgegenhaltungen:
- WO-A-97/28990
- DE-A1- 19 622 231
- DE-U1- 20 103 889
- US-A1- 2003 094 797
- US-A1- 2004 000 775
- US-B1- 6 517 110

## Beschreibung

Die vorliegende Erfindung betrifft eine Luftsackanordnung, die eine im Crashfall aufblasbare Luftsackhülle aufweist, welche dazu dient, um im Crashfall Insassen eines Kraftfahrzeugs vor etwaigen Aufprallverletzungen zu schützen.

Derartige Luftsackanordnungen sind beispielsweise bekannt aus: JP 2003291771, US 2005/0189740 A1, US 2004/0000775 A1 oder US 2003/0094797 A1. Die in den beiden erstgenannten Druckschriften beschriebenen Luftsackanordnungen weisen dabei jeweils eine Luftsackhülle mit mehreren Befestigungslaschen zur Anbringung der Luftsackanordnung an einer Fahrzeugkarosserie auf, wobei die Befestigungslaschen integraler Bestandteil der jeweiligen Luftsackhülle sind. Aus der letztgenannten Druckschrift ist es dabei bekannt, an einer Schutzummantelung, welche zur Aufnahme einer aufblasbaren Luftsackhülle dient, mehrere Aufnahmetaschen vorzusehen, in denen jeweils ein Magnet zur Befestigung der Luftsackanordnung an einer Karosserie hineingeschoben werden kann.

Insbesondere Seiten- und Kopfairbags werden in aller Regel zwischen der Innenverkleidung des Fahrgastraums und der Karosserie angeordnet. Bei der Aktivierung eines solchen Luftsacks tritt dabei die sich entfaltende Luftsackhülle entlang eines definierten Bereichs aus der Innenverkleidung des Fahrgastraums hervor, um die gewünschte Schutzfunktion wahrzunehmen. Bei diesem definierten Bereich kann es sich beispielsweise um eine Stoßstelle handeln, an der zwei benachbarte Innenverkleidungsteile des Fahrgastraums aneinander angrenzen, sodass die sich entfaltende Luftsackhülle dort aus der Innenverkleidung hervortreten kann.

Da solch ein Luftsack üblicherweise an der Fahrzeugkarosserie fixiert sein kann, befindet sich die Luftsackhülle nicht in direkter Nähe zur Innenverkleidung, weshalb ein Bedarf danach besteht, dafür zu sorgen, dass die sich im Crashfall entfaltende Luftsackhülle tatsächlich auf dem gewünschten Weg in den Fahrgastraum gelangt.

Der Erfindung liegt daher die Aufgabe zugrunde, eine Luftsackanordnung anzugeben, welche eine optimierte Positionierung ihrer Luftsackhülle ermöglicht, sodass sich diese im Crashfall ungehindert entfalten kann.

Diese Aufgabe wird mit einer Luftsackanordnung gelöst, welche die Merkmale des Anspruchs 1 aufweist.

Die erfindungsgemäße Luftsackanordnung weist einen Luftsack mit einer Luftsackhülle auf, welche auf der Seite, die im eingebauten Zustand des Luftsacks an einer Fahrzeugkarosserie zu liegen kommt, eine zur Aufnahme eines Positionierungskörpers geeignete Tasche aufweist.

Zwar wäre es theoretisch möglich, derartige Positionierungskörper direkt an der Karosserie vorzusehen, um dadurch den Luftsack bzw. dessen Luftsackhülle in eine für deren Entfaltung optimale Position zu bringen. Allerdings ist eine derartige Anbringung von Positionierungskörpern an der Karosserie aufgrund der damit verbundenen höheren Produktionskosten häufig nicht erwünscht, zumal eine derartige Herangehensweise verhältnismäßig unflexibel ist.

Erfindungsgemäß wird daher eine Möglichkeit geschaffen, einen Positionierungskörper direkt an der Luftsackhülle anbringen zu können, um den Luftsack ganz gezielt in die jeweils gewünschte Einbaulage bringen zu können. Einen solchen Positionierungskörper, welcher in gewisser Weise als Entfaltungshilfe und als Abstandshalter zur Beabstandung der Luftsackhülle von der Karosserie dient, mit Hilfe einer geeigneten Tasche direkt an der Luftsackhülle und nicht an der Karosserie anzubringen, erweist sich dabei insbesondere dahingehend als vorteilhaft, dass dadurch die Positionierung des Luftsacks hinsichtlich des jeweils im Fahrzeug verbauten Luftsacktyps optimiert werden kann. Wenn beispielsweise im Rahmen einer Modellpflege eines Kraftfahrzeugs eine andere Luftsackanordnung als zuvor verbaut werden sollte, ist es daher nicht erforderlich, etwaige an der Fahrzeugkarosserie befindliche Positionierungskörper anders zu platzieren oder in ihrer Gestalt anders auszubilden; vielmehr kann dadurch, dass der Positionierungskörper von einer an der Luftsackhülle befindlichen Tasche aufgenommen wird, die Lage des Positionierungskörpers am Luftsack bereits durch den die Luftsackanordnung herstellenden Zulieferer an die geänderte Situation angepasst werden, sodass keine aufwändigen Modifikationen an der Fahrzeugkarosserie selbst vorgenommen werden müssen.

Vorteilhafte Ausführungsformen der Erfindung ergeben sich aus den Unteransprüchen, der Beschreibung sowie den Zeichnungen.

Gemäß einer bevorzugten Ausführungsform weist die Luftsackanordnung einen zur Positionierung des Luftsacks gegenüber einer Fahrzeugkarosserie geeigneten Körper auf, welcher in der bereits erwähnten Tasche angeordnet ist. Der Positionierungskörper ist somit Bestandteil der Luftsackanordnung und braucht während der Endmontage des Kraftfahrzeugs nicht als selbstständiges Bauteil verbaut zu werden, was sich insbesondere in produktionswirtschaftlicher Hinsicht als vorteilhaft erweist.

Der Positionierungskörper kann dabei jede beliebige Form aufweisen, welche dazu erforderlich ist, um den Luftsack relativ zur Fahrzeugkarosserie sowie der Fahrzeuginnenverkleidung in eine gewünschte Position zu bringen. Um beispielsweise den Abstand zwischen der Innenverkleidung und der Karosserie zu verringern, kann der Positionierungskörper gemäß einer bevorzugten Ausführungsform eine im Wesentlichen quaderförmige Gestalt aufweisen, um die gewünschte Abstandsverringerung zu realisieren.

Eine derartige quaderförmige Gestalt bietet sich insbesondere dann an, wenn die Innenverkleidung und die Fahrzeugkarosserie im Bereich des Luftsacks im Wesentlichen parallel zueinander verlaufen. Wenn jedoch die Karosserie und die Fahrzeuginnenverkleidung nicht parallel, sondern unter einem Winkel zueinander verlaufen, kann der Positionierungskörper beispielsweise eine im Wesentlichen keilförmige Gestalt aufweisen, um der Annäherung der Karosserie an die Innenverkleidung Rechnung zu tragen.

Da die Luftsackhülle in aller Regel aus einem Gewebematerial besteht, ließe sich die zur Aufnahme des Positionierungskörpers geeignete Tasche beispielsweise während des Webvorgangs des Luftsackgewebes als integraler Bestandteil der Luftsackhülle herstellen. Da eine derartige Herstellung jedoch verhältnismäßig aufwändig und damit kostenintensiv ist, wird gemäß einer bevorzugten Ausführungsform vorgeschlagen, die Tasche als eine auf die Luftsackhülle aufgesetzte Gewebelasche auszubilden, welche beispielsweise auf die Luftsackhülle aufgenäht sein kann.

In fertigungstechnischer Hinsicht kann es sich anbieten, die die Tasche bildende Gewebelasche entlang und vorzugsweise mit zwei sich gegenüberliegenden Nähten des Luftsacks auf die Luftsackhülle aufzunähen. So kommen nämlich üblicherweise bei der Fertigung einer Luftsackhülle Nähverfahren zum Einsatz, weshalb es sich anbietet, bereits während dieses ohnehin erforderlichen Nähvorgangs die Gewebelasche mit an die Luftsackhülle anzunähen. Insbesondere kann es sich jedoch als vorteilhaft erweisen, die Gewebelasche nicht etwa mit zusätzlichen Nähten an der Luftsackhülle zu befestigen, sondern vielmehr die Gewebelasche mit den bereits ohnehin erforderlichen Nähten an der Luftsackhülle zu befestigen, welche erforderlich sind, um z.B. einzelne Lagenabschnitte der Luftsackhülle zusammenzunähen oder eine einzige, die Luftsackhülle bildende Materiallage zurecht zu nähen.

Gemäß einer weiteren bevorzugten Ausführungsform kann der Positionierungskörper ein aus einem elastischen Kunststoffmaterial wie beispielsweise Polyethylen (PE) gefertigter, vorzugsweise aufgeschäumter Körper sein. Die Herstellung des Positionierungskörpers aus einem elastischen Kunststoffmaterial erweist sich zum einen dahingehend als vorteilhaft, dass dadurch der Positionierungskörper komprimiert werden kann, um ihn in die an der Luftsackhülle ausgebildete Tasche ungehindert einbringen zu können.

Eine derartige Komprimierung des Positionierungskörpers kann beispielsweise erforderlich sein, wenn dieser durch Reibschluss in der Tasche fixiert werden soll, wozu dessen Abmessungen im Wesentlichen auf die Gestalt der Tasche abzustimmen sind. Da sich in diesem Falle jedoch der Positionierungskörper nicht oder nur schlecht im unkomprimierten Zustand in die Tasche einführen lässt, erweist es sich als vorteilhaft, diesen aus einem elastischen Kunststoffmaterial wie beispielsweise Polyethylen (PE) zu fertigen, um ihn für den Einführvorgang in die Tasche komprimieren zu können.

Die Herstellung des Positionierkörpers aus einem Kunststoffmaterial wie beispielsweise Polyethylen, welches vorzugsweise zur Herstellung des Positionierungskörpers aufgeschäumt wird, erweist sich fernerhin dahingehend als vorteilhaft, dass dadurch gegenüber einem beispielsweise aus Metall gefertigten Positionierungskörper eine Kosteneinsparung von etwa 50 % und eine Gewichtseinsparung von bis zu ca. 90 % erreicht werden kann.

Zwar kann der Positionierungskörper in der vorstehend beschriebenen Art und Weise reibschlüssig von der an der Luftsackhülle ausgebildeten Tasche aufgenommen werden. Alternativ oder in Ergänzung dazu kann es jedoch auch wünschenswert sein, den Positionierungskörper formschlüssig in der Tasche zu sichern. Hierzu kann die Tasche zusätzlich zu einer Einführöffnung zum Einführen des Positionierungskörpers in die Tasche zumindest eine weitere Öffnung aufweisen, in welche ein an dem eingeführten Positionierungskörper ausgebildeter Eingriffsabschnitt formschlüssig eingreift. Bei diesem Eingriffsabschnitt kann es sich beispielsweise um eine integral mit dem Positionierungskörper ausgebildete, abstehende Nase handeln, welche derart dimensioniert und angeordnet ist, dass sie durch die weitere, in der Tasche ausgebildete Öffnung nach außen überstehen kann.

Gemäß einer weiteren bevorzugten Ausführungsform kann es sich bei dem Luftsack um einen zum Schutz des Kopfes eines Fahrzeuginsassen geeigneten Luftsack handeln, welcher im zusammengefalteten Zustand eine im Wesentlichen langgestreckte Luftsackhülle aufweist. Die Luftsackhülle weist dabei eine derartige Gestalt auf, dass sie sich am Fahrzeughimmel zwischen einer A-Säule und einer C-Säule einer Fahrzeugkarosserie und/oder gegebenenfalls über eine B-Säule hinweg erstrecken kann. Da im Falle eines Crashs häufig die Gefahr besteht, dass die C-Säule einschließlich der die C-Säule verkleidenden Innenverkleidung nach oben geschoben wird und dadurch die ungestörte Entfaltung des Luftsacks behindert, ist bei dieser Ausführungsform zumindest ein Positionierungskörper in einem Bereich der Luftsackhülle vorgesehen, welcher sich bei einer der genannten Säulen befindet, um die Luftsackhülle von der Karosserie zu beabstanden. Auf diese Weise kann die Luftsackhülle im Bereich der genannten Säulen nahe an der Innenverkleidung des Fahrgastraums positioniert werden, sodass die Entfaltung des Luftsacks infolge sich nach oben bewegender A-, B- und/oder C-Säulen nicht behindert wird.

Im Folgenden wird nun die Erfindung rein exemplarisch anhand einer beispielhaften Ausführungsform unter Bezugnahme auf die beigefügten Zeichnungen beschrieben, wobei
- Fig. 1: eine schematische Darstellung einer erfindungsgemäßen Luftsackanordnung in einer Rückansicht zeigt;
- Fig. 2: eine perspektivische Darstellung der erfindungsgemäßen Luftsackanordnung der Fig. 1 im Bereich der Tasche zeigt; und
- Fig. 3: eine perspektivische Darstellung der erfindungsgemäßen Luftsackanordnung im Bereich der Tasche mit einem in der Tasche angeordneten Positionierungskörper zeigt.

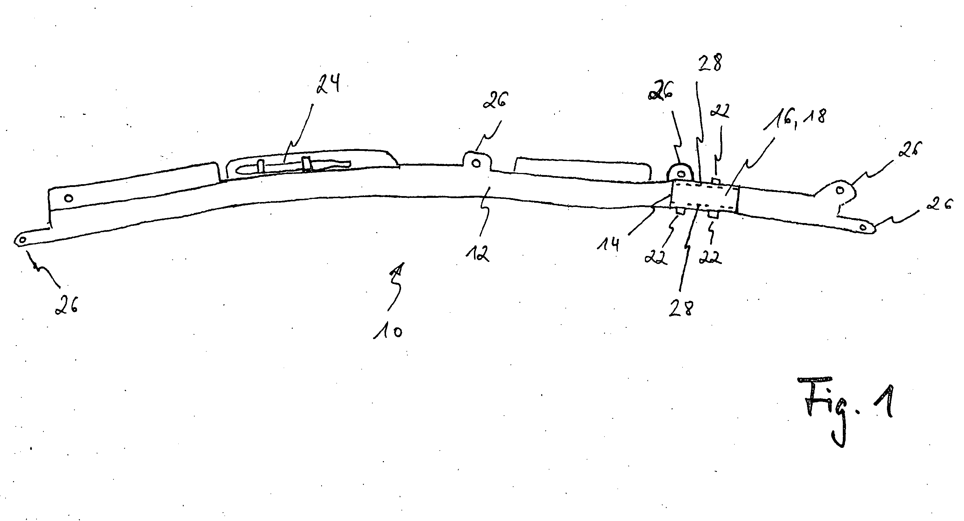

Fig. 1 zeigt eine Rückansicht der erfindungsgemäßen Luftsackanordnung mit einem Luftsacks 10, welche den Luftsack 10 von einer Karosserie aus betrachtet zeigt, an der er über Befestigungsabschnitte 26 angebracht werden kann.

Der Luftsack 10 umfasst eine Luftsackhülle 12, welche im dargestellten zusammengefalteten Zustand eine langgestreckte Gestalt aufweist, um sich am Fahrzeughimmel zwischen der A-Säule und der C-Säule einer Fahrzeugkarosserie oberhalb der Türen der Karosserie entlang zu erstrecken. Die Luftsackhülle 12 weist dabei mehrere Befestigungsabschnitte 26 auf, über die die Luftsackhülle 12 an einer Karosserie befestigt werden kann. Ferner umfasst die Luftsackanordnung einen Gasgenerator 24, welcher dazu dient, im Crashfall ein gasförmiges Medium in den Luftsack 12 einzuleiten, sodass sich dieser in der gewünschten Weise entfaltet.

Darüber hinaus weist die Luftsackhülle 12 eine zur Aufnahme eines Positionierungskörpers 14 geeignete Tasche 16 auf, die sich auf jener Seite der Luftsackhülle 12 befindet, welche im eingebauten Zustand des Luftsacks 10 an der Fahrzeugkarosserie zu liegen kommt.

Wie dabei der Fig. 1 entnommen werden kann, kann die Tasche 16 beispielsweise durch eine Gewebelasche 18 gebildet werden, welche mit zwei sich gegenüberliegenden Nähten 28 auf die Luftsackhülle aufgenäht ist. Hierdurch wird erfindungsgemäß zwischen der Luftsackhülle 12 und der Gewebelasche 18 eine sich zwischen den Nähten 28 erstreckende Durchgangsöffnung gebildet, in welche ein Positionierungskörper 14 eingeschoben werden kann. Von diesem Positionierungskörper 14 sind in der Darstellung der Fig. 1 lediglich die an dem Positionierungskörper 14 ausgebildeten Eingriffsabschnitte 22 dargestellt, welche durch entsprechende Öffnungen in der Tasche 16 nach außen ragen, um den Positionierungskörper 14 formschlüssig in der Tasche 16 zu sichern.

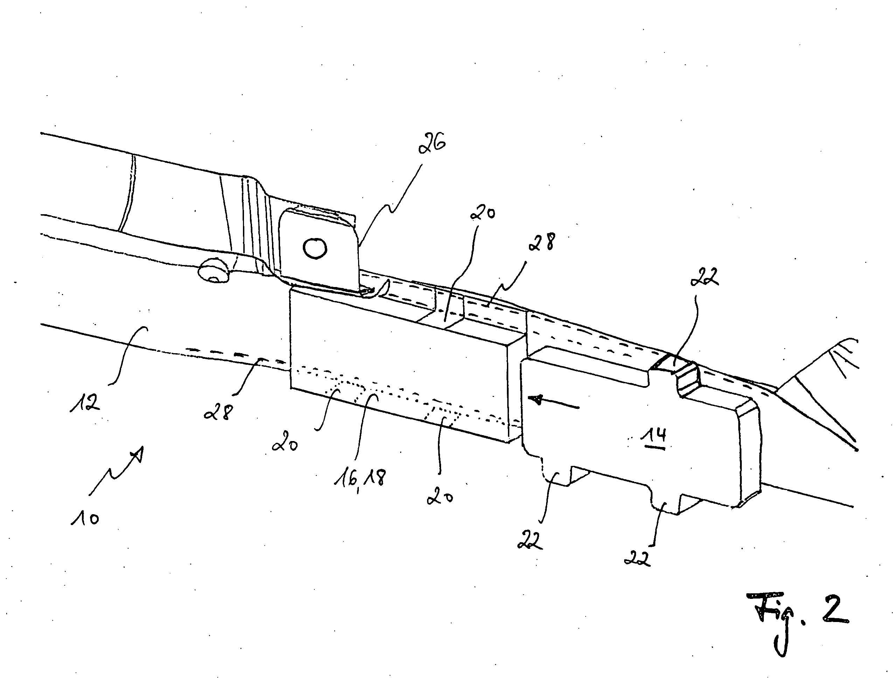

Wie der Fig. 2 entnommen werden kann, die den Luftsack 10 im Bereich der Tasche 16 in vergrößerter Darstellung zeigt, kann der Positionierungskörper 14 beispielsweise eine im Wesentlichen quaderförmige Gestalt mit davon abstehenden Eingriffsabschnitten 22 aufweisen. Die Fig. 2 zeigt dabei eine Situation, in der der Positionierungskörper 14 sich noch außerhalb der durch die Gewebelasche 18 definierten Tasche 16 befindet. Wie der Darstellung der Fig. 2 entnommen werden kann, bildet die an der Luftsackhülle 12 durch die Nähte 28 festgenähte Gewebelasche 18 die bereits zuvor erwähnte Durchgangsöffnung aus, in welche der Positionierungskörper 14 ausgehend aus der in der Fig. 2 dargestellten Ausgangsstellung in Pfeilrichtung hinein geschoben werden kann.

Damit der Positionierungskörper 14, nachdem er in Pfeilrichtung (siehe Fig. 2) in die Tasche 16 eingeschoben wurde, sicher darin gehalten wird, kann der Positionierungskörper 14 Außenabmessungen aufweisen, welche die Abmessungen der Tasche 16 geringfügig übersteigen. Um dennoch den Positionierungskörper 14 in die Tasche 16 einführen zu können, kann der Positionierungskörper 14 aus einem elastischen Kunststoffmaterial wie beispielsweise Polyethylen gefertigt sein, sodass er, um in die Tasche 16 eingeschoben werden zu können, komprimiert werden kann. Nachdem der Positionierungskörper 14 auf diese Weise in die Tasche 16 eingeführt wurde, dehnt er sich dann aufgrund seiner elastischen Materialeigenschaften wieder aus, sodass er reibschlüssig in der Tasche 16 gehalten wird.

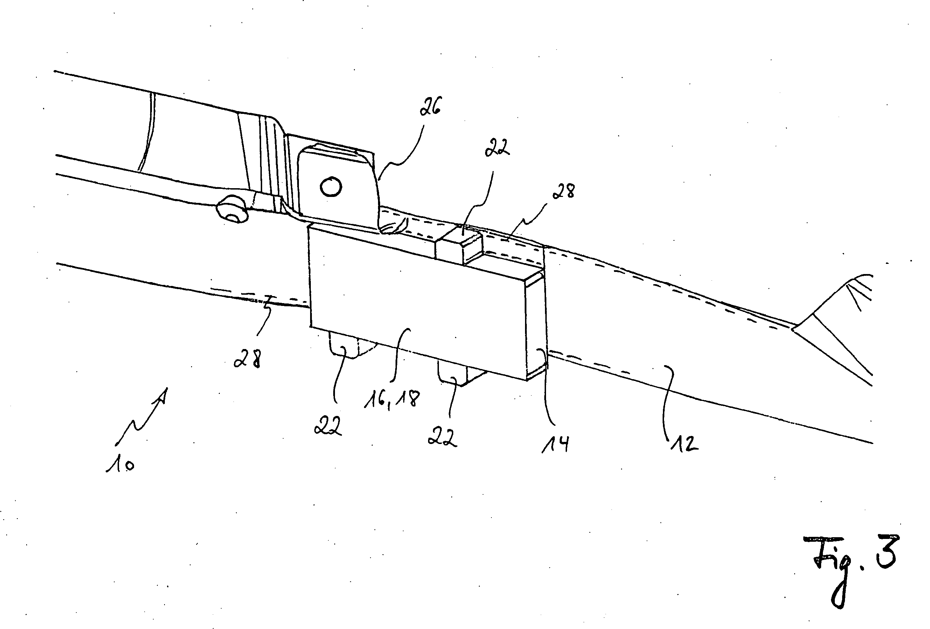

Um den Positionierungskörper 14 zusätzlich in der Tasche 16 zu sichern, weist die Tasche 16 neben der Durchgangsöffnung eine oder mehrere Öffnungen 20 auf, in welche die an dem Positionierungskörper 14 ausgebildeten Eingriffsabschnitte 22 formschlüssig eingreifen, wie dies in der Fig. 3 dargestellt ist. Die nasenartigen Eingriffsabschnitte 22 ragen dabei aus den Öffnungen 20 der Tasche 16 heraus und verhindern somit zusätzlich, dass sich der Positionierungskörper 14 in der Tasche 16 verschieben kann.

Abschließend sei erwähnt, dass der Positionierungskörper 14 abweichend von der hier dargestellten quaderförmigen Gestalt jede beliebige Form aufweisen kann, um den Luftsack 10 bzw. die Luftsackhülle 12 relativ zur Fahrzeugkarosserie sowie zur Fahrzeuginnenverkleidung in eine gewünschte Position zu bringen. Beispielsweise kann der Positionierungskörper 14 eine im Wesentlichen keilförmige Gestalt aufweisen, wenn die Fahrzeugkarosserie und die Fahrzeuginnenverkleidung nicht parallel, sondern unter einem Winkel zueinander verlaufen.

Mit Hilfe des Positionierungskörpers 14 ist es somit möglich, die Luftsackhülle 12 an potentiell kritischen Stellen gezielt so zu positionieren, dass die Entfaltung des Luftsacks 10 im Crashfall nicht nur nicht behindert, sondern eine ungestörte Entfaltung der Luftsackhülle in der bestimmungsgemäßen Weise vielmehr unterstützt wird.

### Bezugszeichenliste

- 10: Luftsack
- 12: Luftsackhülle
- 14: Positionierungskörper
- 16: Tasche
- 18: Gewebelasche
- 20: Öffnung
- 22: Eingriffsabschnitt
- 24: Gasgenerator
- 26: Befestigungsabschnitt
- 28: Naht

## Patentansprüche

1. Luftsackanordnung für ein Kraftfahrzeug mit einem aufblasbaren Luftsack (10), dessen aufblasbare Luftsackhülle (12) auf einer Seite wenigstens eine Tasche (16) aufweist, die im eingebauten Zustand des Luftsacks (10) zwischen einer Fahrzeugkarosserie und der nämlichen Seite der Luftsackhülle zu liegen kommt und zur Aufnahme eines zur Positionierung des Luftsacks (10) relativ zu einer Fahrzeugkarosserie geeigneten Körpers (14) ausgebildet ist.

2. Luftsackanordnung nach Anspruch 1,
**dadurch gekennzeichnet, dass**
der Luftsack (10) ferner einen zur Positionierung des Luftsacks (10) relativ zu einer Fahrzeugkarosserie geeigneten Körper (14) aufweist, welcher in der Tasche (16) angeordnet oder zur Anordnung in der Tasche (16) ausgebildet ist.

3. Luftsackanordnung nach Anspruch 1 oder 2,
**dadurch gekennzeichnet, dass**
die Tasche (16) durch eine auf die Luftsackhülle (12) aufgesetzte Gewebelasche (18) gebildet ist, welche vorzugsweise auf die Luftsackhülle (12) aufgenäht ist.

4. Luftsackanordnung nach Anspruch 3,
**dadurch gekennzeichnet, dass**
die Gewebelasche (18), vorzugsweise mit zwei sich gegenüberliegenden Nähten (28), auf die Luftsackhülle (12) aufgenäht ist.

5. Luftsackanordnung nach zumindest einem der Ansprüche 2 bis 4,
**dadurch gekennzeichnet, dass**
der Positionierungskörper (14) ein aus einem elastischen Kunststoffmaterial, vorzugsweise aus Polyethylen, gefertigter Körper ist.

6. Luftsackanordnung nach zumindest einem der voranstehenden Ansprüche,
**dadurch gekennzeichnet, dass**
die Tasche (16) zusätzlich zu einer Einführöffnung zum Einführen des Positionierungskörpers (14) zumindest eine weitere Öffnung (20) aufweist, in welche ein an dem eingeführten Positionierungskörper (14) ausgebildeter Eingriffsabschnitt (22) formschlüssig eingreift.

7. Luftsackanordnung nach zumindest einem der Ansprüche 2 bis 6,
**dadurch gekennzeichnet, dass**
es sich bei dem Luftsack (10) um einen zum Schutz des Kopfes eines Fahrzeuginsassen geeigneten Luftsack (10) mit einer im zusammengefalteten Zustand langgestreckten Luftsackhülle (12) handelt, welche ausgebildet ist, um sich am Fahrzeughimmel zwischen einer A-Säule und einer C-Säule einer Fahrzeugkarosserie und gegebenenfalls über eine B-Säule hinweg zu erstrecken, wobei zumindest ein Positionierungskörper (14) in einem Bereich der Luftsackhülle (12) angeordnet ist, welcher bei einer der Säulen zu liegen kommt, um die Luftsackhülle (12) von der Karosserie zu beabstanden.

## Claims

1. Airbag arrangement for a motor vehicle, comprising an inflatable airbag (10), the inflatable airbag cover (12) of which has on one side at least one pocket (16) which in the installed state of the airbag (10) comes to lie between a vehicle body and said side of the airbag cover and is designed to accommodate a body (14) suitable for positioning the airbag (10) relative to a vehicle body.

2. Airbag arrangement according to claim 1, **characterised in that** the airbag (10) furthermore has a body (14) which is suitable for positioning the airbag (10) relative to a vehicle body and which is arranged in the pocket (16) or is designed to be arranged in the pocket (16).

3. Airbag arrangement according to claim 1 or 2, **characterised in that** the pocket (16) is formed by a fabric bracket (18) which is attached to the airbag cover (12) and is preferably sewn onto the airbag cover (12).

4. Airbag arrangement according to claim 3, **characterised in that** the fabric bracket (18) is sewn onto the airbag cover (12), preferably by two seams (28) located opposite one another.

5. Airbag arrangement according to at least one of claims 2 to 4, **characterised in that**
the positioning body (14) is a body made of an elastic plastic material, preferably of polyethylene.

6. Airbag arrangement according to at least one of the preceding claims, **characterised in that**
the pocket (16) has, in addition to an insertion opening for insertion of the positioning body (14), at least one further opening (20) in which an engagement portion (22) on the inserted positioning body (14) engages with a form fit.

7. Airbag arrangement according to at least one of claims 2 to 6, **characterised in that**
the airbag (10) is an airbag (10) suitable for protecting the head of a vehicle occupant and comprising an airbag cover (12) which is elongate in the folded state and which is designed to extend along the vehicle roof between an A-column and a C-column of a vehicle body and optionally over a B-column, wherein at least one positioning body (14) is arranged in a region of the airbag cover (12) which comes to lie on one of the columns in order to space the airbag cover (12) apart from the body.

## Revendications

1. Installation de coussin d'air pour un véhicule automobile avec un coussin d'air gonflable (10), dont l'enveloppe de coussin d'air gonflable (12) présente sur un côté au moins une poche (16) qui, dans l'état monté du coussin d'air (10), vient se placer entre une carrosserie de véhicule et ledit côté de l'enveloppe de coussin d'air, et est réalisée de façon à recevoir un corps (14) convenant pour le positionnement du coussin d'air (10) par rapport à une carrosserie de véhicule.

2. Installation de coussin d'air selon la revendication 1, **caractérisée en ce que** le coussin d'air (10) présente en outre un corps (14) convenant pour le positionnement du coussin d'air (10) par rapport à une carrosserie de véhicule, qui est disposé dans la poche (16) ou qui est réalisé en vue d'être disposé dans la poche (16).

3. Installation de coussin d'air selon la revendication 1 ou 2, **caractérisée en ce que** la poche (16) est formée par une patte de tissu (18) appliquée sur l'enveloppe de coussin d'air (12), qui est de préférence cousue sur l'enveloppe de coussin d'air (12).

4. Installation de coussin d'air selon la revendication 3, **caractérisée en ce que** la patte de tissu (18) est cousue sur l'enveloppe de coussin d'air (12), de préférence au moyen de deux coutures opposées l'une à l'autre (28).

5. Installation de coussin d'air selon au moins une des revendications 2 à 4, **caractérisée en ce que** le corps de positionnement (14) est un corps fabriqué en une matière plastique élastique, de préférence en polyéthylène.

6. Installation de coussin d'air selon au moins une des revendications précédentes, **caractérisée en ce que** la poche (16) présente, en plus d'une ouverture d'introduction destinée à introduire le corps de positionnement (14), au moins une autre ouverture (20) dans laquelle une partie d'engagement (22), formée sur le corps de positionnement introduit (14), s'engage en complémentarité de forme.

7. Installation de coussin d'air selon au moins une des revendications 2 à 6, **caractérisée en ce que** le coussin d'air (10) est un coussin d'air (10) apte à protéger la tête d'un occupant du véhicule, avec une enveloppe de coussin d'air allongée (12) à l'état replié, qui est réalisée de façon à s'étendre, sur le plafond du véhicule, entre une colonne A et une colonne C d'une carrosserie de véhicule et éventuellement par dessus une colonne B, dans laquelle un corps de positionnement (14) se trouve, dans une zone de l'enveloppe de coussin d'air (12), ledit corps de positionnement (14) venant se placer près d'une des colonnes, afin d'écarter l'enveloppe de coussin d'air (12) de la carrosserie.
